## Europäisches Patentamt

## European Patent Office

## Office européen des brevets

(11) Publication number: **0 115 443**
**B1**

(12) # EUROPEAN PATENT SPECIFICATION

(45) Date of publication of patent specification: **16.08.90**

(51) Int. Cl.⁵: **G 02 B 6/26**

(21) Application number: **84300601.6**

(22) Date of filing: **31.01.84**

(54) **Fiber optics couplers.**

(30) Priority: **31.01.83 US 462296**

(43) Date of publication of application:
**08.08.84 Bulletin 84/32**

(45) Publication of the grant of the patent:
**16.08.90 Bulletin 90/33**

(84) Designated Contracting States:
**BE CH DE FR GB IT LI NL SE**

(56) References cited:
**EP-A-0 037 787
EP-A-0 099 823
FR-A-2 530 392**

**REVUE DE PHYSIQUE APPLIQUEE, vol. 19, no. 2, February 1984, pages 99-102, Orsav, FR; Ph. GACOIN et al.: "Un multiplexeur 3 voies à faibles pertes"**

(73) Proprietor: **KAPTRON INC.**
**580 College Avenue
Palo Alto California (US)**

(72) Inventor: **Kapany, Narinder Singh
2126 Greenways Drive
Woodside California 94061 (US)**
Inventor: **Unterleitner, Fred Charles
3732 Grove Avenue
Palo Alto California 94303 (US)**

(74) Representative: **Sturt, Clifford Mark
MARKS & CLERK 57-60 Lincoln's Inn Fields
London WC2A 3LS (GB)**

Courier Press, Leamington Spa, England.

## Description

This invention relates generally to optical fiber communications, and more specifically to modules for intercoupling of light from or to fibers and performing, splitting, duplexing, multiplexing and demultiplexer functions.

As existing communication systems have become increasingly overloaded, optical transmission through transparent fibers has been found to provide a means of achieving a smaller cross-section per message, thus enabling an increased capacity within existing conduit constraints. The basic medium of transmission is an optical fiber. A first type of fiber is a stepped index fiber which comprises a transparent core member and a transparent cladding, the core member having a higher index of refraction than the cladding. Light is transmitted through the core, and contained within the core by internal reflection. So long as the light does not deviate from the fiber axis by more than the complement of the critical angle for the core-cladding interface, total internal reflection with substantially no loss results. A second type of fiber is a graded index fiber whose refractive index gradually decreases away from the fiber axis. Transmission is highly reliable, and is substantially insensitive to electrical noise, cross-coupling between channels, and the like.

As with any communication medium, once a suitable transmission line has been found, the need arises for modules to couple sources and detectors to the line, couple lines together, perform switching, splitting, duplexing and multiplexing functions. Ultimately, the total system can be no more reliable than these modules. When it is considered that the core of a typical optical communication fiber is characterized by a diameter of only 60 μm, it can be immediately appreciated that such modules must be fabricated and installed to highly precise tolerances.

In order to realize the inherent reliability of optical fiber communication systems, the modules themselves must be highly reliable since they are typically installed in relatively inaccessible locations (e.g. within conduits running under city streets, etc.). A further requirement for a satisfactory optical communication system is that the modules introduce a minimum of loss into the system. It has only been with the development of extremely high transparency fibers that optical fiber communication has become practical, and the introduction of lossy modules would considerably undercut the advantages and efficiency of such systems.

According to one aspect of the present invention an optical demultiplexer comprising: a first spherical reflective surface having a focal plane containing the centre of curvature of the first spherical reflective surface; a first optical port located in the said focal plane; and a second optical port located in the focal plane such that the said centre of curvature is on the straight line joining the first and second ports and is equidisant from each is characterized in that a second spherical reflective surface is disposed between the first spherical reflective surface and the said focal plane, the second spherical reflective surface having its centre of curvature located in the said focal plane, and a third optical port is located in the said focal plane such that the centre of curvature of the second spherical reflective surface is located on the straight line joining the first and third ports and is equidistant from each, the second spherical reflective surface being dichroic so that light will be reflected from the first port to the third port only if it is of a wavelength reflected by the second spherical reflective surface.

Such a demultiplexer may also be used as a multiplexer. Light sources, light receivers or fibers may be located at the various ports as appropriate to the function which the device is to perform.

Multiplexing and demultiplexing may be carried out in accordance with the preferred embodiment of the invention by providing first and second image reflective surfaces arranged along parallel optical axes. Means are provided for locating a source, a detector or a fiber at selected first and second self-conjugate locations of each of said first and second reflective surfaces. The second spherical reflective surface disposed in the optical path between the first spherical reflective surface and the self-conjugate locations is provided with a dichroic coating for selectively transmitting and reflecting optical signals impinging from selected source locations. The first reflective surface may be translatable transverse of the parallel axes relative to the second reflective surface for steering images of selected wavelengths to other self-conjugate locations independent of the self-conjugate locations defined for the first reflective surface. Alternatively, the reflective surfaces may be fixed. The device may be provided with a solid transparent spacer which may alternatively serve as a sliding bearing surface for laterally translating a solid body suppporting the first reflective surface. The solid body may be transparent material having a convex surface forming a concave reflector.

Stages of such devices may be stacked together, provided with beam splitting mirrors, or linked by means of optical fibers to obtain multiple wavelength taps and multiple wavelength multiplexers and demultiplexers.

For a further understanding of the nature and advantages of the present invention, reference should be had to the remaining portions of this specification and to the attached drawings, wherein:

Figure 1 is a side cross-sectional view of a source/fiber coupler;

Figure 1A illustrates a coupler;

Figure 2 illustrates a multiple wavelength multiplexer;

Figure 3A is a schematic representation of a three wavelength tap;

Figure 3B illustrates a particular three wavelength tap; and

Figure 4 illustrates an alternative multiple wavelength multiplexer according to the invention.

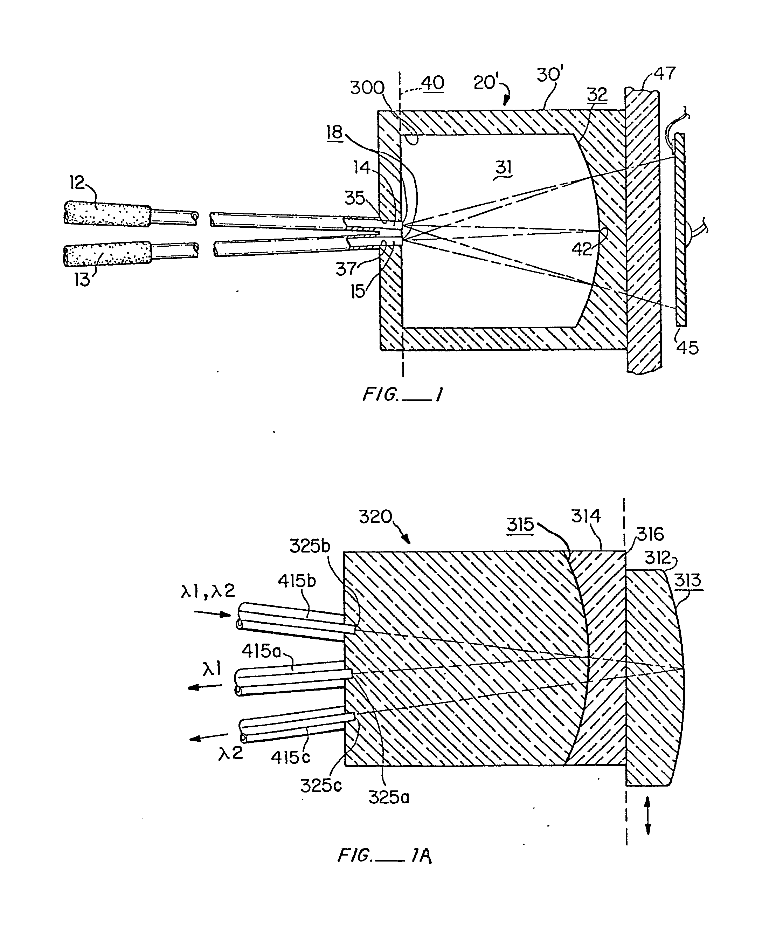

Figure 1 is a cross-sectional view of a transparent imaging element 20' with fibers 14 and 15 registered thereto. Imaging element 20' comprises a cavity 300 within a body 30' of material, body 30' having a curved surface 32 at a first end and paired cylindrical fiber insertion holes 35 and 37 at a second end. Surface 32 is a polished surface and coated with a reflective coating such as a multilayer dielectric coating that reflects most of the light incident on it from within cavity 300, but transmits a small fraction. Surface 32 is characterized by a focal plane 40 having the property that a point source in focal plane 40 is imaged in focal plane 40. Surface 32 is preferably spherical, in which case focal plane 40 is perpendicular to a radial axis and passes through the center of curvature. Fiber insertion holes 35 and 37 are of a diameter to accommodate fibers 14 and 15 and to maintain the fiber ends at precisely registered locations in focal plane 40 such that the cone of light emanating from a point source at the end of fiber 14 is imaged on the end of fiber 15. Body 30' is preferably formed from a plastic by an injection molding process.

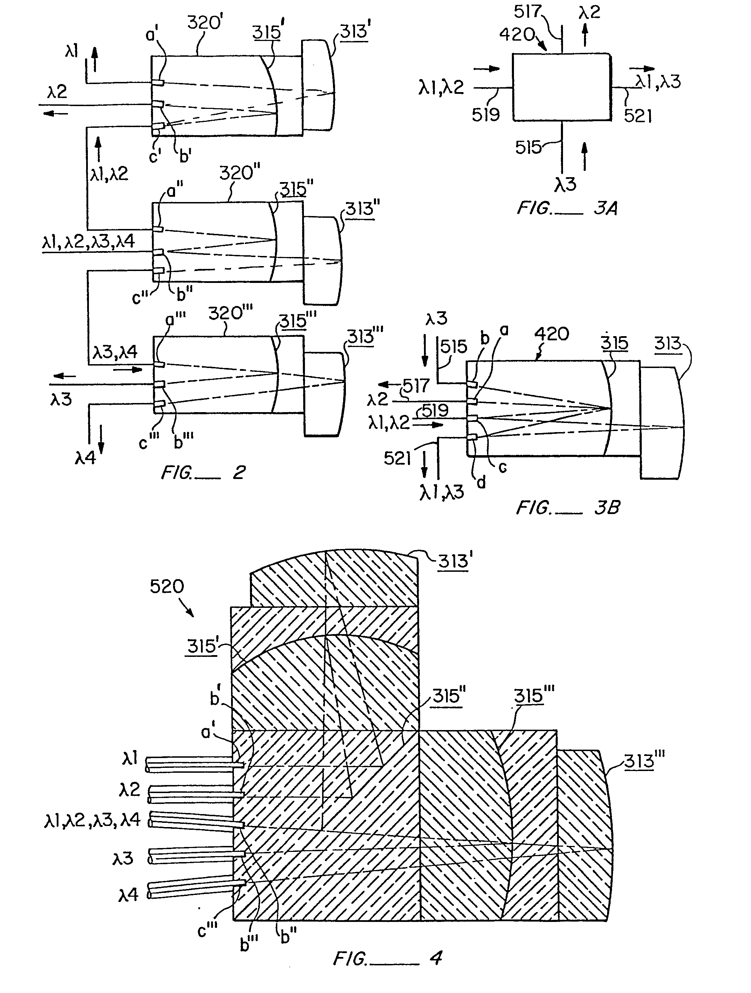

Means are provided for matching the index of refraction of the fiber cores to the index of refraction of a medium 31 within the cavity 300 which medium may be a vacuum, a transparent gas or other transparent mass whose index of refraction is other than precisely that of the core of the fibers 14 and 15. To this end the matching means may be an optical frequency matching element such as a coating of a medium 18 having an index of refraction intermediate of the indices of refraction of the medium 31 and fibers 14 and 15. Magnesium fluoride in a thickness of one-quarter wavelength at the operational wavelength of signals is suitable between optical glass and air. Adjustments may be made to thickness of the matching medium 18 to accommodate differences in indices of refraction between the optical fibers and to achieve a precise optical impedance match. The other structures disclosed herein may employ the basic structure as disclosed in connection with either Fig. 1A or Fig. 2.

Turning to Fig. 1A there is shown an embodiment of a device according to the invention. The device is a coupler 320 which may operate as a duplexer, multiplexer or demultiplexer, depending on the nature of the fibers and transceivers. This embodiment utilizes a concave mirror assembly 312 having a reflective rear surface 313 as the focusing means, so that light of the second wavelength that passes through a dichroic surface 315 is imaged by mirror 312 at a location, designated 325c, that is on the same side of dichroic surface 315 as are locations 325a and 325b. Preferably, location 325c is proximate locations 325a and 325b. This is achieved by having the center of curvature of dichroic surface 315 lie between locations 325b and 325a and the center of curvature of mirror surface 313 lie between locations 325b and 325c. Fig. 1A shows three fibers 415a, 415b and 415c having their respective ends registered at locations 325a, 325b and 325c. Fiber 415b carries signals at both the first and second wavelengths, and depending on the arrangement of sources and detectors coupled to fibers 415b and 415c, coupler 320 will operate as a duplexer, a multiplexer, a demultiplexer or the like.

The embodiment of Fig. 1A may include a solid transparent spacer 314 interposed between the mirror assembly 312 and the dichroic surface 315. The mirror assembly 312 may be a solid transparent body having a reflective surface 313 as a coating on the outer convex surface of the concave mirror assembly 312. The mirror assembly 312 is translatable along a common margin 316 between the mirror assembly 312 and the spacer 314. The spacer 314 assures correct alignment between the dichroic surface 315 and the reflective surface 313.

Fig. 2 illustrates a multiple wavelength multiplexer constructed of devices as shown in Fig. 1A. Four signals are intended (or in the reverse signal path received) through a terminal b'' of coupler 320''. Reflective surface 313'' is reflective of third and fourth wavelength signals to direct them by geometry to terminal c'' and through a fiber to terminal a''' of coupler 320'''. Dichroic surface 315'' is transparent of the third and fourth wavelength signals but is reflective of the first and second wavelength signals. The first and second wavelength signals are directed by geometry through terminal a'' of coupler 320'' to terminal c' of coupler 320'.

Dichroic surface 315' is reflective of second wavelength signals but transparent to first wavelength signals. Dichroic surface 315' is positioned to image location c' to location b' of coupler 320' while reflective surface 313' is positioned to image location c' to location a' of coupler 320'. Thus, first wavelength signals may be separated from second wavelength signals in coupler 320'.

Similarly in coupler 320''', dichroic surface 315''' is reflective of only third wavelength signals, which are imaged from location a''' to location b''', and reflective surface 313''' is reflective of fourth wavelength signals, which are imaged from location a''' to location c''' as a consequence of the positioning of the center of curvature of reflective surface 313'''.

The coupler system of Fig. 12 may be rendered substantially more compact and in a different form although with an equivalent function. Fig. 14 is a representative of a four wavelength multiplexer/demultiplexer device 520 whose functional capabilities are equivalent to those of the coupler system of Fig. 12. To aid comparison, elements in device 520 of functional equivalence to the elements of the system of Fig. 12 are given identical numerals.

Second dichroic 315'' is a flat dichroic medium on a boundary in a beam splitter in the optical path of all optical signals. The device 520 has five terminals, terminal location b'' for multiple wavelength signal input and four terminal locations a', b', b''' and c''' for single wavelength output. The first dichroic surface 315' and the first reflective surface 313' are in the reflective path of the second dichroic surface 315'' with the effective centers of curvature between locations b'' and, b' or a', respectively.

The third dichroic surface 315''' and third reflective surface 313''' are in the transmission path of the second dichroic surface 315''' with the effective centers of curvature between locations b'' and, b''' or c''', respectively.

Figs. 3A and 3B illustrate a three wavelength tap 420 according to the invention. As shown diagrammatically in Fig. 3A, first, second, third and fourth fibers 515, 517, 519 and 521 join in a four port device and redistribute signals between two input ports and two output ports. First and second wavelength signals may enter together on third fiber 519. Third wavelength signals may enter on first fiber 515. Second wavelength signals may exit on second fiber 517 and first and third wavelength signals may exit on fourth fiber 521.

These functions are accomplished in a three wavelength tap 420 as shown in Fig. 3B. Four fibers are disposed at consecutive locations a, b, c and d in the focal plane of a second spherical reflective surface formed by a dichroic medium 315 and of a first spherical reflective surface 313. Position a is imaged to position d relative to the second reflective surface 315. Position c is imaged to position b relative to the dichroic surface 315 and to position d relative to the reflective surface 313.

In summary it can be seen that the present invention provides a surprisingly effective series of modules for interfacing optical fibers with a very low light loss and with provisions for monitoring the optical signal. While the above provides a full and complete disclosure of the preferred embodiment of the present invention, various modifications, alternate constructions, and equivalents may be employed without departing from the scope of the invention as claimed. For example, the splitters and switches described were geometrically symmetric devices. However, there is no need for such geometrical symmetry, nor is there any absolute requirement that the fractions of light transmitted be equal or that the switching be total. Rather, a switch could employ features of a splitter as well in order to provide partial switching and partial splitting. Moreover, while a common focal plane is shown, this is not an absolute prerequisite. Therefore, the above descriptions and illustrations should not be construed as limiting the scope of the invention which is defined by the appended claims.

## Claims

1. An optical demultiplexer (320) comprising: a first spherical reflective surface (313) having a focal plane (40) containing the centre of curvature of the first spherical reflective surface (313); a first optical port (325b) located in the said focal plane (40); a second optical port (325c) located in the focal plane (40) such that the said centre of curvature is on the straight line joining the first and second ports (325b, 325c) and is equidistant from each; a second spherical reflective surface (315) disposed between the first spherical reflective surface (313) and the said focal plane; the second spherical reflective surface (315) having its centre of curvature located in the said plane, and a third optical port (325a) located in the said focal plane such that the center of curvature of the second spherical reflective surface (315) is located on the straight line joining the first (325b) and third (325a) ports and is equidistant from each, the second spherical reflective surface being dichroic so that light will be reflected from the firt port (325b) to the third port (325a) only if it is of a wavelength (21) reflected by the second spherical reflective surface (315), wherein said first spherical reflective surface (313) is adapted to be translatable with respect to said second spherical reflective surface (315).

2. A device for permitting multiple optical signals of differing wavelengths to be transmitted simultaneously in a first optical path and to be transmitted separately in at least second and third optical paths comprising: means defining a first spherical reflective surface (313 in Figure 3B) with a focal plane having the property that a point source of light in said focal plane is imaged in said focal plane; first position defining means for registering an end of a first optical fiber to a first location (c) within said focal plane; second position defining means for registering an end of a second optical fiber to a second location (d) within said focal plane and separated from said first location (c), said first and second locations (c, d) being on opposite sides of a first radial axis and displaced equal distance from said first radial axis such that the center of curvature of said first spherical reflective surface lies on a straight line between said first and second locations (c, d), whereby said second location (d) is optically complementary to said first location (c) so that light at said first location (c) is imaged by said first spherical reflective surface at said second location (d); means defining a second spherical reflective surface disposed between said first spherical reflective surface and said first location (c), said second spherical reflective surface defining means having the properties that a point source of light within a first selected wavelength range and in said focal plane is imaged by a dichroic medium in said focal plane, and that a point source of light outside of said selected wavelength range and in said focal plane passes through said second spherical reflective surface defining means and is imaged in said focal plane by said first spherical reflective surface defining means; third position defining means for registering an end of a third optical fiber to a third location (a) within said focal plane and separated from said first location (c), said first and third locations (c, a) being on opposite sides of a second radial axis and displaced equal distance from said second radial axis such that the center of curvature of said second spherical reflective surface lies in a straight line between said first and third locations (c, a), whereby said third location (a) is optically complementary to said first location (c) so that light at said first location (c) is imaged by said second spherical reflective surface at said third location (a); and optically transparent means disposed between said first spherical reflective surface and said second spherical reflective surface for maintaining alignment of said first reflective surface, said second reflective surface and said first, second and third locations (c, d, a) wherein said device is for use as a wavelength selective tap and further comprises: fourth position defining means for registering an end of a fourth optical fiber to a fourth location (b) within said focal plane and separated from said second location (d), said second and fourth locations (d, b) being on opposite sides of said second radial axis and displaced equal distance from said second radial axis such that the center of curvature of said second spherical reflective surface lies in a straight line between said second and fourth locations (d, b), whereby said fourth location (b) is optically complementary to said second location (d) such that light at said fourth location (b) is imaged by said second spherical reflective surface at said second location (d).

3. A coupler for multiplexing or demultiplexing a plurality of optical signals of differing wavelengths comprising: first, second and third couplers wherein each coupler comprises a device for permitting multiple optical signals of differing wavelengths to be transmitted simultaneously in a first optical path and to be transmitted separately in at least second and third optical paths comprising: means defining a first spherical reflective surface with a focal plane having the property that a point source of light in said focal plane is imaged on said focal plane; first position defining means for registering an end of a first optical fiber to a first location (b'') within said focal plane; second position defining means for registering an end of a second optical fiber to a second location (c'') within said focal plane and separated from said first location (b''), said first and second locations (c'') being on opposite sides of a first radial axis and displaced equal distance from said first radial axis such that the center of curvature of said first spherical reflective surface lies on a straight line between said first and second locations (b'', c''), whereby said second location (c'') is optically complementary to said first location (b'') so that light at said first location (b'') is imaged by said first spherical reflective surface at said second location (c''); means defining a second spherical reflective surface disposed between said first spherical reflective surface and said first location (b''), said second spherical reflective surface defining means having the properties that a point source of light within a first selected wavelength range and in said focal plane is imaged by a dichroic medium in said focal plane, and that a point source of light outside of said selected wavelength range and in said focal plane passes through said second spherical reflective surface defining means and is imaged in said focal plane by said first spherical reflective surface defining means; third position defining means for registering an end of a third optical fiber to a third location (a'') within said focal plane and separated from said first location (b''), said first and third locations (b'', a'') being on opposite sides of a second radial axis and displaced equal distance from said second radial axis such that the center of curvature of said second spherical reflective surface lies in a straight line between said first and third locations (b'', a''), whereby said third location (a'') is optically complementary to said first location (b'') so that light at said first location (b'') is imaged by said second spherical reflective surface at said third location (a''); and optically transparent means disposed between said first spherical reflective surface and said second spherical reflective surface for maintaining alignment of said first reflective surface, said second reflective surface and said first, second and third locations (b'', c'', a''), each of said first, second and third couplers having a second spherical reflective surface (designated second prime, second double prime and second triple prime) characterized by different ranges of reflective and transmissive wavelengths, wherein said second double prime spherical reflective surface is reflective of first and second wavelengths signals and transmissive of third and fourth wavelengths signals, wherein said second prime spherical reflective surface is reflective of said second wavelength signals and transmissive of said first wavelength signals, wherein said second triple prime spherical reflective surface is reflective of said third wavelength signals and transmissive of said fourth wavelength signals; and further comprising fiber means coupled between said second coupler and said first coupler for conveying said first and second wavelength signals between said second coupler (320'') and said first coupler (320'), and coupled between said second coupler and said third coupler (320''') for conveying said third and fourth wavelength signals between said second coupler and said third coupler.

4. A device for permitting multiple wavelength optical signals to be transmitted simultaneously in a first optical path and to be transmitted separately in at least second, third, fourth and fifth optical paths comprising: means defining a first spherical reflective surface (313'), means defining a second spherical reflective surface (315'), means defining a third spherical reflective surface (313'''), and means defining a fourth spherical reflective surface (315'''), said first, second, third and fourth spherical reflective surfaces having a focal plane with the property that a point source of light in said focal plane is imaged in said focal plane; said second spherical reflective surface (315') being reflective of a second wavelength signal $\lambda_2$ and transmissive of a first wavelength signal $\lambda_1$; said fourth spherical reflective surface (315''') being transmissive of a fourth wavelength signal $\lambda_4$ and reflective of a third wavelength signal $\lambda_3$; means defining a planar reflective surface (315'') disposed between said first, second, third and fourth spherical reflective surfaces and said focal plane, said planar reflective surface being reflective of said first and second wavelength signals and transmissive of said third and fourth wavelength signals; first position defining means for registering and end of a first optical fiber to a first location (b'') within said focal plane; second position defining means for registering an end of a second optical fiber to a second location (a') within said focal plane and separated from said first location (b''), said first and second locations (b'', a') being on opposite sides of a first radial axis of said first spherical reflective surface formed by a reflection upon said planar reflective surface, said first and second locations (b'', a') being displaced equal distance from said first radial axis such that the center of curvature of said first spherical reflective surface as reflected lies on a straight line between said first and second locations (b'', a'), whereby said second location (a') is optically complementary to said first location (b'') so that light of said first wavelength at said first location (b'') is imaged by said first spherical reflective surface and said planar reflective surface at said second location (a'); third position defining means for registering an end of a third optical fiber to a third location (b') within said focal plane and separated from said first location (b''), said first and third locations (b'', b') being on opposite sides of a second radial axis of said second spherical reflective surface formed by a reflection upon said planar reflective surface, said first and third locations (b'', b') being displaced equal distance from said second radial axis such that the center of curvature of said second spherical reflective surface, as reflected by said planar reflective surface, lies on a straight line between said first and third locations (b'', b'), whereby said third location (b') is optically complementary to said first location (b''), so that light of said second wavelength at said first location (b'') is imaged by said second spherical reflective surface and said planar reflective surface at said third location (b'); fourth position defining means for registering an end of a fourth optical fiber to a fourth location (c''') within said focal plane and separated from said first location (b''), said first and fourth locations (b'', c''') being on opposite sides of a third radial axis of said third spherical reflective surface, said first and fourth locations (b'', c''') being displaced equal distance from said third radial axis such that the center of curvature of said third spherical reflective surface lies on a straight line between said first and fourth locations (b'', c'''), whereby said fourth location (c''') is optically complementary to said first location (b''), so that light of said fourth wavelength at said first location (b'') is imaged by said third spherical reflective surface at said fourth location (c'''); and fifth position defining means for registering an end of a fifth optical fiber to a fifth location (b''') within said focal plane and separated from said first location (b''), said first and fifth locations (b'', b''') being on opposite sides of a fourth radial axis of said fourth spherical reflective surface, said first and fifth locations (b'', b''') being displaced equal distance from said fourth radial axis such that the center of curvature of said fourth spherical reflective surface lies on a straight line between said first and fifth locations (b'', b'''), whereby said fifth location (b''') is optically complementary to said first location (b''), so that light of said third wavelength at said first location (b'') is imaged by said fourth spherical reflective surface at said fifth location (b''').

5. The device as claimed in claim 4 wherein all of said reflective surfaces are spaced relative to one another by solid optically transparent media.

**Patentansprüche**

1. Optischer Demultiplexer (320) enthaltend:
eine erste sphärische spiegelnde Grensychicht (313) mit einer Brennpunktsebene (40), welche den Krümmungsmittelpunkt der ersten sphärischen spiegelnden Grenzschicht (313) enthält;
einen ersten optischen Anschluß (325b), welcher in der Brennpunktsebene (40) angeordnet ist;
einen zweiten optischen Anschluß (325c), welcher so in der Brennpunktsebene (40) angeordnet ist, daß der Krümmungsmittelpunkt auf einer geraden Verbindungslinie mit dem ersten und zweiten Anschluß (325b, 325c) liegt und von jedem äquidistant ist;
eine zweite sphärische spiegelnde Grenzschicht (315), welche zwischen der ersten sphärischen spiegelnden Grenzschicht (313) und der Brennpunktsebene angeordnet ist;
der Krümmingsmittelpunkt der zweiten sphärischen spiegelnden Grenzschicht (315) ist in der erwähnten Ebene angeordnet und ein dritter optischer Anschluß (325a) ist so in der Brennpunktsebene angeordnet, daß der Krümmingsmittelpunkt der zweiten sphärischen spiegelnden Grenzschicht (315) auf einer geraden Linie liegt, welche den ersten Anschluß (325b) und den dritten Anschluß (325a) verbindet, und von jedem äquidistant ist;
die zweite sphärische spiegelnde Grenzschicht ist dichroitisch, so daß das Licht vom ersten Anschluß (325b) nur zum dritten Anschluß (325a) gespiegelt wird, wenn es eine Wellenlänge (21) besitzt, welche von der zweiten sphärischen spiegelnden Grenzschicht (315) reflektiert wird, wobei vorgesehen ist, die erste sphärische spiegelnde Grenzschicht (313) in Hinsicht auf die zweite sphärische spiegelnde Grenzschicht (315) zu versetzen.

2. Vorrichtung, welche die gleichzeitige Übertragung einer Vielzahl von optischen Signalen mit verschiedenen Wellenlängen in einem ersten Lichtweg und getrennt davon in wenigstens einem zweiten und dritten Lichtweg erlaubt, umfassend:

Mittel, welche eine erste sphärische spiegelnde Grenzschicht festlegen (313 aus Fig. 3B), mit einer Brennpunktsebene, welche die Eigenschaft hat, daß eine punktförmige Lichtquelle in der Brennpunktsebene auf die Brennpunktsebene abgebildet wird;

ein erstes ortsbestimmendes Mittel, welches das Ende einer ersten optischen Faser an einem ersten Ort (c) innerhalb der Brennpunktsebene einpaßt;

ein zweites ortsbestimmendes Mittel, welches das Ende einer zweiten optischen Faser an einem zweiten Ort (d) innerhalb der Brennpunktsebene und getrennt vom ersten Ort (c) einpaßt, wobei der erste und der zweite Ort (c, d) auf entgegengesetzten Seiten einer ersten radialen Achse liegen und mit gliechem Abstand von dieser ersten radialen Achse angeordnet sind, so daß der Krümmungsmittelpunkt der ersten sphärischen spiegelnden Grenzschicht auf einer geraden Linie zwischen den ersten und dem zweiten Ort (c, d) liegt, wobei der zweite Ort (d) optisch komplementär zum ersten Ort (c) ist, so daß das Licht am ersten Ort (c) von der ersten sphärischen spiegelnden Grenzschicht auf den zweiten Ort (d) abgebildet wird;

Mittel, welche eine zweite sphärische spiegelnde Grenzschicht festlegen, die zwischen der ersten sphärischen spiegelnden Grenzschicht und dem ersten Ort (c) angeordnet ist, wobei die Mittel, die die zweite sphärische spiegelnde Grenzschicht festlegen, die Eigenschaft haben, daß eine punktförmige Lichtquelle innerhalb eines ersten ausgewählten Wellenlängenbereich und innerhalb der Brennpunktsebene von einem dichroitischen Mittel in die Brennpunktsebene abgebildet wird, und daß eine punktförmige Lichtquelle außerhalb des ausgewählten Wellenlängenbereichs und innerhalb der Brennpunktsebene durch das die zweite sphärische spiegelnde Grenzschicht bildende Mittel hindurchtritt und in die Brennpunktsebene durch die erste spiegelnde Grenzschicht abgebildet wird;

ein drittes ortsbestimmende Mittel, welches das Ende einer dritten optischen Faser an einem dritten Ort (a) innerhalb der Brennpunktsebene und getrennt vom ersten Ort (c) einpaßt, wobei der erste und der dritte Ort (c, a) auf entgegengesetzten Seiten einer zweiten radialen Achse und mit gliechem Abstand von der zweiten radialen Achse angeordnet sind, so daß der Krümmungsmittelpunkt der zweiten sphärischen spiegelnden Grenzschicht auf einer geraden Linie zwischen dem ersten und dem dritten Ort (c, a) liegt, und wobei der dritte Ort (a) optisch komplementär zum ersten Ort (c) ist, so daß das Licht am ersten Ort (c) von der zweiten sphärischen spiegelnden Grenzschicht auf den dritten Ort (a) abgebildet wird; und

optisch durchlässige Mittel, die zwischen der ersten sphärischen spiegelnden Grenzschicht und der zweiten sphärischen spiegelnden Grenzschicht angeordnet sind, um die Axialität der ersten spiegelnden Grenzschicht, der zweiten spiegelnden Grenzschicht und des ersten, zweiten und dritten Ortes (c, d, a) zu erhalten, wobei diese Vorrichtung als wellenlängenselektive Anzapfung beuntzbar ist und der weiteren enthält:

ein viertes ortsfestbestimmendes Mittel, um das Ende einer vierten optischen Faser an einem vierten Ort (b) innerhalb der Brennpunktsebene und getrennt vom zweiten Ort (d) einzupassen, wobei der zweite und der vierte Ort (d, b) auf entgegengesetzten Seiten der zweiten radialen Achse liegen und mit gleichem Abstand von der zweiten radialen Achse derart angeordnet sind, daß der Krümmungsmittelpunkt der zweiten sphärischen spiegelnden Grenzschicht auf einer geraden Linie zwischen dem zweiten und dem vierten Ort (d, b) liegt, und wobei der vierte Ort (b) optisch komplementär zum zweiten Ort (d) ist, so daß das Licht am vierten Ort (b) durch die zweite sphärische spiegelnde Grenzschicht auf den zweiten Ort (d) abgebildet wird.

3. Kupplung zum Multiplexen oder Demultiplexen einer Anzahl von optischen Signalen mit verschiedenen Wellenlängen, umfassend:

eine erste, zweite und dritte Kupplung, wobei jede Kupplung eine Einrichtung aufweist, die es erlaubt, eine Anzahl von optischen Signalen von verschiedenen Wellenlängen in einem ersten Lichtweg und gliechzeitig getrennt in mindestens einem zweiten und dritten Lichtweg zu übertragen, enthaltend;

Mittel, welche eine erste sphärische spiegelnde Grenzschicht festlegen und eine Brennpunktsebene aufweisen, die die Eigenschaft hat, daß eine punktförmige Lichtquelle in der Brennpunktsebene in die Brennpunktsebene abgebildet wird;

ein erstes ortsfestbestimmendes Mittel, welches das Ende einer ersten optischen Faser an einem ersten Ort (b'') innerhalb der Brennpunktsebene einpaßt;

ein zweites ortsfestbestimmendes Mittel, welches das Ende einer zweiten optischen Faser an einem zweiten Ort (c'') innerhalb der Brennpunktsebene und getrennt vom ersten Ort (b'') einpaßt, wobei der erste und der zweite Ort (c'') auf entgegengesetzten Seiten einer ersten radialen Achse liegen und mit gleichem Abstand von der ersten radialen Achse so angeordnet sind, daß der Krümmungsmittelpunkt der ersten sphärischen spiegelnden Grenzschicht auf einer geraden Linie zwischen dem ersten und dem zweiten Ort (b'', c'') liegt, und wobei der zweite Ort (c'') optisch komplementär zum ersten Ort (b'') ist, so daß Licht am ersten Ort (b'') durch die erste sphärische spiegelnde Grenzschicht auf den zweiten Ort (c'') abgebildet wird;

Mittel, welche eine zweite sphärische spiegelnde Grenzschicht festlegen und zwischen der ersten sphärischen spiegelnde Grenschicht und dem ersten Ort (b'') angeordnet sind, wobei die Mittel, die die zweite sphärische spiegelnde Grenzschicht festlegen die Eigenschaft haben, daß eine punktförmige Lichtquelle innerhalb einer ersten ausgewählten Wellenlängenbereichs und innerhalb der Brennpunktsebene durch ein dichroitisches Mittel in die Brennpunktsebene abgebildet wird, und daß eine punktförmige Lichtquelle außerhalb des ausgewählten Wellenlängenbereichs und innerhalb der Brennpunktsebene durch die Mittel, welche die zweite sphärische spiegelnde Grenzschicht festlegen, hindurchtritt und durch die die erste sphärische spiegelnde Grenzschicht festlegenden Mittel in die Brennpunktsebene angebildet wird;

ein drittes ortsbestimmendes Mittel, welches das Ende einer dritten optischen Faser an einem dritten Ort (a'') innerhalb der Brennpunktsebene und getrennt von ersten Ort (b'') einpaßt, wobei der erste und dritte Ort (b'', a'') auf entgegengesetzten Seiten einer zweiten radialen Achse liegen und mit gliechem Abstand von der zweiten radialen Achse angeordnet sind, so daß der Krümmungsmittelpunkt der zweiten sphärischen spiegelnden Grenzschicht auf einer geraden Linie zwischen dem ersten und dritten Ort (b'', a'') liegt, und wobei der dritte Ort (a'') optisch komplementär zum ersten Ort (b'') ist, so daß Licht am ersten Ort (b'') durch die zweite sphärische spiegelnde Grenzschicht auf den dritten Ort (a'') abgebildet wird; und optisch durchlässige Mittel, welche zwischen der ersten sphärischen reflektierenden Grenzschicht und der zweiten sphärischen reflektierenden Grenzschicht angeordnet sind, um die Axialität der ersten spiegelnden Grenzschicht, der zweiten spiegelnden Grenzschicht und des ersten, zweiten und dritten Ortes (b'', c'', a'') zu erhalten;

jede der erwähnten ersten, zweiten und dritten Kupplungen hat eine zweite sphärische spiegelnde Grenzschicht (bezeichnet mit eingestrichen, zweigestrichen und dreigestrichen), gekennzeichnet durch einen unterschiedlichen Bereich von reflektierten und übertragenen Wellenlängen, wobei die zweite zweigestrichene sphärische spiegelnde Grenzschicht für Signale mit einer ersten und zweiten Wellenlänge reflektierend und für Signale mit einer dritten und vierten Wellenlänge durchlässig ist, wobei die zweite eingestrichene sphärische spiegelnde Grenzschicht Signale mit der zweiten Wellenlänge reflektiert und Signale mit der ersten Wellenlänge durchläßt, und wobei die zweite dreigestrichene sphärische spiegelnde Grenzschicht für Signale mit der dritten Wellenlänge reflektierend ist und Signale mit der vierten Wellenlänge durchläßt;

und weiter enthaltend Fasern, welche zwischen die zweite Kupplung und die erste Kupplung gekoppelt sind, um Signale der ersten oder zweiten Wellenlänge zwischen der zweiten Kupplung (320'') und der ersten Kupplung (320') zu übertragen, und welche zwischen die zweite Kupplung und die dritte Kupplung (320''') gekoppelt sind zum Übertragen von Signalen mit der dritten und vierten Wellenlänge zwischen der zweiten Kupplung und der dritten Kupplung.

4. Vorrichtung, welche es erlaubt, optische Signale mit mehreren Wellenlängen in einem ersten Lichtweg und gleichzeitig getrennt in wenigstens einem zweiten, dritten, vierten und fünften Lichtweg zu übertragen, enthaltend:

Mittel zur Festlegung einer ersten sphärischen spiegelnden Grenzschicht (313'), Mittel zum Festlegen einer zweiten sphärischen spiegelnden Grenzschicht (315'), Mittel zum Festlegen einer dritten sphärischen spiegelnden Grenzschicht (313''') und Mittel zum Festlegen einer vierten sphärischen spiegelnden Grenzschicht (315'''), wobei die erste, zweite, dritte un vierte sphärische spiegelnde Grenzschicht eine Brennpunktsebene besitzen, die die Eigenschaft hat, daß eine punktförmige Lichtquelle in der Brennpunktsebene in die Brennpunktsebene abgebildet wird;

die zweite sphärische spiegelnde Grenzschicht (315') ist reflektierend für ein Signal mit der zweiten Wellenlänge $\lambda_2$ und durchlässig für ein Signal mit der ersten Wellenlänge $\lambda_1$;

die vierte sphärische spiegelnde Grenzschicht (315''') ist durchlässig für ein Signal mit der vierten Wellenlänge $\lambda_4$ und reflektierend für ein Signal mit der dritten Wellenlänge $\lambda_3$;

Mittel, welche eine ebene spiegelnde Grenzschicht (315'') Festlegen, angeordnet zwischen der ersten, zweiten, dritten und vierten sphärischen spiegelnden Grenzschicht und der Brennpunktsebene und wobei die ebene spiegelnde Grenzschicht für Signale mit der ersten und zweiten Wellenlänge reflektierend ist und für Signale mit der dritten und vierten Wellenlänge durchlässig ist;

ein erstes ortsbestimmendes Mittel, welches das Ende einer ersten optischen Faser an einem ersten Ort (b'') innerhalb der Brennpunktsebene einpaßt;

ein zweites ortsbestimmendes Mittel, welches das Ende einer zweiten optischen Faser an einem zweiten Ort (a') innerhalb der Brennpunktsebene und getrennt vom ersten Ort (b'') einpaßt, wobei der erste und zweite Ort (b'', a') auf entgegengesetzten Seiten einer ersten radialen Achse der ersten sphärischen spiegelnden Grenzschicht gebildet durch eine Reflexion an der ebenen spiegelnden Grenzschicht angeordnet sind, der erste und zweite Ort (b'', a') sind mit gleichem Abstand von der ersten radialen Achse so angeordnet, daß der Krümmungsmittelpunkt der ersten sphärischen spiegelnden Grenzschicht auf einer geraden Linie zwischen dem ersten und zweiten Ort (b'', a') liegt, und wobei der zweite Ort (a') optisch komplementär zum ersten Ort (b'') ist, so daß das Licht der ersten Wellenlänge am ersten Ort (b'') von der ersten sphärischen spiegelnden Grenzschicht und der ebenen spiegelnden Grenzschicht auf den zweiten Ort (a') abgebildet wird;

ein drittes ortsbestimmendes Mittel, welches das Ende einer dritten optischen Faser an einem dritten Ort (b') innerhalb der Brennpunktsebene und getrennt vom ersten Ort (b'') einpaßt, wobei der erste und der dritte Ort (b'', b') auf entgegengesetzten Seiten einer zweiten radialen Achse der zweiten sphärischen spiegelnden Grenzschicht gebildet durch eine Reflexion auf der ebenen spiegelnden Grenzschicht angeordnet sind, und wobei der erste und der dritte Ort (b'', b) mit gliechem Abstand von der zweiten radialen Achse so angeordnet sind, daß der Krümmungsmittelpunkt der zweiten sphärischen spiegelnden Grenzschicht wie von der ebenen spiegelnden Grenzschicht reflektiert auf einer geraden Linie zwischen der dem ersten und dem dritten Ort (b'', b') liegt, und wobei der dritte Ort (b') optisch komplementär zum ersten Ort (b'') ist, so daß das Licht einer zweiten Wellenlänge am ersten Ort (b'') durch die zweite sphärische spiegelnde Grenzschicht und die ebene spiegelnde Grenzschicht auf den dritten Ort (b') abgebildet wird;

ein viertes ortsbestimmendes Mittel, welches das Ende einer vierten optischen Faser an einem vierten Ort (c''') innerhalb der Brennpunktsebene und getrennt vom ersten Ort (b'') einpaßt, wobei der erste und der vierte Ort (b'', c''') sich auf entgegengesetzten Seiten einer dritten radialen Achse der dritten sphärischen spiegelnden Grenzschicht befinden, und wobei der erste und der vierte Ort (b'', c''') mit gleichem Abstand von der dritten radialen Achse angeordnet sind, so daß der Krümmungsmittelpunkt der dritten sphärischen spiegelnden Grenzschicht auf einer geraden Linie zwischen dem ersten und dem vierten Ort (b'', c''') liegt, und wobei der vierte Ort (c''') optisch komplementär zu dem ersten Ort (b'') ist, so daß das Licht einer vierten Wellenlänge an dem ersten Ort (b'') durch die dritte sphärische spiegelnde Grenzschicht auf den vierten Ort (c''') abgebildet wird;

und ein fünftes ortsbestimmendes Mittel, welches das Ende einer fünften optischen Faser an einem fünften Ort (b''') innherhalb der Brennpunktsebene und getrennt vom ersten Ort (b'') einpaßt, wobei der erste und der fünfte Ort (b'', b''') sich auf entgegengesetzten Seiten einer vierten radialen Achse der vierten sphärischen spiegelnden Grenzschicht befinden, und der erste und der fünfte Ort (b'', b''') mit gleichem Abstand von der vierten radialen Achse angeordnet sind, so daß der Krümmungsmittelpunkt der vierten sphärischen spiegelnden Grenzschicht auf einer geraden Linie zwischen dem ersten und dem fünften Ort (b'', b''') liegt, und wobei der fünfte Ort (b''') optisch komplementär zum ersten Ort (b'') ist, so daß das Licht einer dritten Wellenlänge am ersten Ort (b'') von der vierten sphärischen spiegelnden Grenzschicht auf den fünften Ort (b''') abgebildet wird.

5. Eine Vorrichtung nach Anspruch 4, gekennzeichnet dadurch, daß alle spiegelnden Grenzschichten durch feste optisch transparente Medien auseinandergehalten werden.

## Revendications

1. Un démultiplexeur optique (320) comprenant: une première surface réfléchissante sphérique (313), ayant un plan focal (40) contenant le centre de courbure de la première surface réfléchissante sphérique (313); un premier orifice optique (325b) situé dans ledit plan focal (40); un deuxième orifice optique (325c) situé dans le plan focal (40), de sorte que ledit centre de courbure soit sur la ligne droite joignant les premier et douxième orifices (325b, 325c) et soit équidistant de chacun; une deuxième surface réfléchissante sphérique (315) disposée entre la première surface réfléchissante sphérique (313) et ledit plan focal; la deuxième surface réfléchissante sphérique (315) ayant son centre de courbure situé dans ledit plan, et un troisième orifice optique (325a) situé dans ledit plan focal, de sorte que le centre de courbure de la deuxième surface réfléchissante sphérique (315) soit situé sur la ligne droite joignant les premier (325b) et troisième (325a) orifices et soit équidistant de chacun, la deuxième surface réfléchissante sphérique étant dichroïque, de sorte que la lumière sera réfléchie du premier orifice (325b) au troisième orifice (325a) seulement si elle est d'une longueur d'onde (21) rélféchie par la deuxième surface réfléchissante sphérique (315), ladite première surface réfléchissante sphérique (313) étant adaptée pour être déplaçable en translation par rapport à ladite deuxième surface réfléchissante sphérique (315).

2. Un dispositif pour permettre à des signaux optiques multiples de longueurs d'onde différentes d'être transmis simultanément dans un premier parcours optique et d'être transmis séparément dans au moins des deuxième et troisième parcours optiques, comprenant; des moyens définissant une première surface réfléchissante sphérique (313 sur la Figure 3B), avec un plan focal ayant la propriété qu'une source lumineuse ponctuelle dans ledit plan focal a son image dans ledit plan focal; des moyens définissant une première position pour mettre en registre une extrémité d'une première fibre optique avec un premier emplacement (c) à l'intérieur dudit plan focal; des moyens définissant une deuxième position pour mettre en registre une extrémité d'une deuxième fibre optique avec un deuxième emplacement (d) à l'intérieur dudit plan focal et séparé dudit premier emplacement (c), lesdits premier et deuxième emplacements (c, d) étant sur des côtés opposés d'un premier axe radial et déplacés d'une distance égale dudit premier axe radial, de sorte que le centre de courbure de ladite première surface réfléchissante sphérique se trouve sur une ligne droite entre lesdits premier et deuxième emplacements (c, d), ce par quoi ledit deuxième emplacement (d) est optiquement complémentaire dudit premier emplacement (c), de sorte que la lumière audit premier emplacement (c) a son image par ladite première surface réfléchissante sphérique audit deuxième emplacement (d); des moyens définissant une deuxième surface réfléchissante sphérique disposés entre ladite première surface réfléchissante sphérique et ledit premier emplacement (c), lesdits moyens définissant la deuxième surface réfléchissante sphérique ayant les propriétés qu'une source lumineuse ponctuelle à l'intérieur d'une première plage choisie de longueurs d'onde et dans ledit plan focal a son image par un milieu dicroïque dans ledit plan focal, et qu'une source lumineuse ponctuelle à l'extérieur de ladite plage choisie de longueurs d'onde et dans ledit plan focal traverse lesdits moyens définissant le deuxième surface réfléchissante sphérique et a son image dans ledit plan focal par lesdits moyens définissant la première surface réfléchissant sphérique; des moyens définissant une troisième position pour mettre en registre une extrémité d'une troisième fibre optique avec un troisième emplacement (a) à l'intérieur dudit plan focal et séparé dudit premier emplacement (c), lesdits premier et troisième emplacements (c, a) étant sur des côtés opposés d'un deuxième axe radial et déplacés d'une distance égale dudit deuxième axe radial, de sorte que le centre de courbure de ladite deuxième surface réfléchissante sphérique se trouve sur une ligne droite entre lesdits premier et troisième emplacements (c, a), ce par quoi ledit troisième emplacement (a) est optiquement complémentaire dudit premier emplacement (c), de sorte que la lumière audit premier emplacement (c) à son image par ladite deuxième surface réfléchissante sphérique audit troisième emplacement (a); et des moyens optiquement transparents disposés entre ladite première surface réfléchissante sphérique et ladite deuxième surface réfléchissante sphérique pour maintenir l'alignement de ladite première surface réfléchissante, de ladite deuxième surface réfléchissante et desdits premier, deuxième et troisième emplacements (c, d, a), ledit dispositif étant destiné à être utilisé en tant que robinet sélectif de longueur d'onde et comprenant en outre; des moyens définissant une quatrième position pour mettre en registre une extrémité d'une quatrième fibre optique avec un quatrième emplacement (b) à l'intérieur dudit plan focal et séparé dudit deuxième emplacement (d), lesdits deuxième et quatrième emplacements (d, b) étant sur des côtés opposés dudit deuxième axe radial et déplacés d'une distance égale dudit deuxième axe radial, de sorte que le centre de courbure de ladite deuxième surface réfléchissante sphérique se trouve sur une ligne droite entre lesdits deuxième et quatrième emplacements (d, b), ce par quoi ledit quatrième emplacement (b) est optiquement complémentaire dudit deuxième emplacement (d), de sorte que la lumière audit quatrième emplacement (b) a son image par ladite deuxième surface réfléchissante sphérique audit deuxième emplacement (d).

3. Un coupleur pour le multiplexage ou le démultiplexage de plusieurs signaux optiques de longueurs d'onde différentes, comprenant; des premier, deuxième et troisième coupleurs, chaque coupleur comprenant un dispositif pour permettre à des signaux optiques multiples de longueurs d'onde différentes d'être transmis simultanément dans un premier parcours optique et d'être transmis séparément dans au moins des deuxième et troisième parcours optiques, comprenant: des moyens définissant une première surface réfléchissante sphérique, avec un plan focal ayant la propriété qu'une source lumineuse ponctuelle dans ledit plan focal a son image dans ledit plan focal; des moyens définissant une première position pour mettre en registre une extrémité d'une première fibre optique avec un premier emplacement (b'') à l'intérieur dudit plan focal; des moyens définissant une deuxième position pour mettre en registre une extrémité d'une deuxième fibre optique avec un deuxième emplacement (c'') à l'intérieur dudit plan focal et séparé dudit premier emplacement (b''), lesdits premier et deuxième emplacements (b'', c'') étant sur des côtés opposés d'un premier axe radial et déplacés d'une distance égale dudit premier axe radial, de sorte que le centre de courbure de ladite première surface réfléchissante sphérique se trouve sur une ligne droite entre lesdits premier et deuxième emplacements (b'', c''), ce par quoi ledit deuxième emplacement (c'') est optiquement complémentaire dudit premier emplacement (b''), de sorte que la lumière audit premier emplacement (b'') a son image par ladite première surface réfléchissante sphérique audit deuxième emplacement (c''); des moyens définissant une deuxième surface réfléchissante sphérique, disposés entre ladite première surface réfléchissante sphérique et ledit premier emplacement (b''), lesdits moyens définissant la deuxième surface réfléchissante sphérique ayant les propriétés qu'une source lumineuse ponctuelle à l'intérieur d'une première plage choisie de longueurs d'onde et dans ledit plan focal a son image par un milieu dichroïque dans ledit plan focal, et qu'une source lumineuse ponctuelle à l'extérieur de ladite plage choisie de longueurs d'onde et dans ledit plan focal traverse lesdits moyens définissant la deuxième surface réfléchissante sphérique et a son image dans ledit plan focal par lesdits moyens définissant la première surface réfléchissante sphérique; des moyens définissant une troisième position pour mettre en registre une extrémité d'une troisième fibre optique avec un troisième emplacement (a'') à l'intérieur dudit plan focal et séparé dudit premier emplacement (b''), lesdits premier et troisième emplacements (b'', a'') étant sur des côtés opposés d'un deuxième axe radial et déplacés d'une égale distance dudit deuxième axe radial, de sorte que le centre de courbure de ladite deuxième surface réfléchissante sphérique se trouve sur une ligne droite entre lesdits premier et troisième emplacements (b'', a''), ce par quoi ledit troisième emplacement (a'') est optiquement complémentaire dudit premier emplacement (b''), de sorte que la lumière audit premier emplacement (b'') a son image par ladite deuxième surface réfléchissante sphérique audit troisième emplacement (a''); et des moyens optiquement transparents disposés entre ladite première surface réfléchissante sphérique et ladite deuxième surface réfléchissante sphérique pour maintenir l'alignement de ladite première surface réfléchissante, de ladite deuxième surface réfléchissante et desdits premier, deuxième et troisième emplacements (b'', c'', a''), chacun desdits premier, deuxième et troisième coupleurs ayant une deuxième surface réfléchissante sphérique (désignée deuxième prime, deuxième seconde et deuxième tierce), caractérisée par des plages différentes de longueurs d'onde de réflexion et de transmission, ladite surface réfléchissante sphérique deuxième seconde étant réflectrice de signaux d'une première et d'une deuxième longueur d'onde, et transmettrice de signaux d'une troisième et d'une quatrième longueur d'onde, ladite surface réfléchissante sphérique deuxième prime étant réflectrice desdits signaux de la deuxième longueur d'onde, et transmettrice desdits signaux de la première longueur d'onde, ladite surface réfléchissante sphérique deuxième tierce étant réflectrice desdits signaux de la troisième longueur d'onde, et transmettrice desdits signaux de la quatrième longueur d'onde; et comprenant en outre des moyens de fibre couplés entre ledit deuxième coupleur et ledit premier coupleur pour transporter lesdits signaux des première et deuxième longueurs d'onde entre ledit deuxième coupleur (320'') et ledit premier coupleur (320'), et couplés entre ledit deuxième coupleur et ledit troisième coupleur (320''') pour transporter lesdits signaux des troisième et quatrième longueurs d'onde entre ledit deuxième coupleur et ledit troisième coupleur.

4. Un dispositif pour permettre à des signaux optiques de longueurs d'onde multiples d'être transmis simultanément dans un premier parcours optique et d'être transmis séparément dans au moins des deuxième, troisième, quatrième et cinquième parcours optiques comprenant: des moyens définissant une première surface réfléchissante sphérique (313'), des moyens définissant une deuxième surface réfléchissante sphérique (315'), des moyens définissant une troisième surface réfléchissante sphérique (313'''), et des moyens définissant une quatrième surface réfléchissante sphérique (315'''), lesdites première, deuxième, troisième et quatrième surfaces réfléchissantes sphériques ayant un plan focal avec la propriété qu'une source lumineuse ponctuelle dans ledit plan focal a son image dans ledit plan focal; ladite deuxième surface réfléchissante sphérique (315') étant réflectrice d'un signal d'une deuxième longueur d'onde $\lambda_2$, et transmettrice d'un signal d'une première longueur d'onde $\lambda_1$; ladite quatrième surface réfléchissante sphérique (315''') étant transmettrice d'un signal d'une quatrième longueur d'onde $\lambda_4$, et réflectrice d'un signal d'une troisième longueur d'onde $\lambda_3$; des moyens définissant une surface réfléchissante plane (315'') disposés entre lesdites première, deuxième, troisième et quatrième surfaces réfléchissantes sphériques et ledit plan focal, ladite surface réfléchissante plane étant réflectrice desdits signaux de la première et de la seconde longueur d'onde, et transmettrice desdits signaux de la troisième et de la quatrième longueur d'onde; des moyens définissant une première position pour mettre en registre une extrémité d'une première fibre optique avec un premier emplacement (b'') à l'intérieur dudit plan focal; des moyens définissant une deuxième position pour mettre en registre une extrémité d'une deuxième fibre optique avec un deuxième emplacement (a') à l'intérieur dudit plan focal et séparé dudit premier emplacement (b''), lesdits premier et deuxième emplacements (b'', a') étant sur des côtés opposés d'un premier axe radial de ladite première surface réfléchissante sphérique formés par une réflexion sur ladite surface réfléchissante plane, lesdits premier et deuxième emplacements (b'', a') étant déplacés d'une distance égale dudit premier axe radial, de sorte que le centre de courbure de ladite première surface réfléchissante sphérique, tel qu'il est réfléchi, se trouve sur une ligne droite entre lesdits premier et deuxième emplacements (b'', a'), ce par quoi ledit deuxième emplacement (a') est optiquement complémentaire dudit premier emplacement (b''), de sorte que la lumière de ladite première longueur d'onde audit premier emplacement (b'') a son image par ladite première surface réfléchissante sphérique et ladite surface réfléchissante plane audit deuxième emplacement (a'); des moyens définissant une troisième position pour mettre en registre une extrémité d'une troisième fibre optique avec un troisième emplacement (b') à l'intérieur dudit plan focal et séparé dudit premier emplacement (b''), lesdits premier et troisième emplacements (b'', b') étant sur des côtés opposés d'un deuxième axe radial de ladite deuxième surface réfléchissante sphérique formés par un réflexion sur ladite surface réfléchissante plane, lesdits premier et troisième emplacements (b'', b') étant déplacés d'une distance égale dudit deuxième axe radial, de sorte que le centre de courbure de ladite deuxième surface réfléchissante sphérique, tel qu'il est réfléchi par ladite surface réfléchissante plane, se trouve sur une ligne droite entre lesdits premier et troisième emplacements (b'', b'), ce par quoi ledit troisième emplacement (b') est optiquement complémentaire dudit premier emplacement (b''), de sorte que la lumière de ladite deuxième longueur d'onde audit premier emplacement (b'') a son image par ladite deuxième surface réfléchissante sphérique et ladite surface réfléchissante plane audit troisième emplacement (b'); des moyens définissant une quatrième position pour mettre en registre une extrémité d'une quatrième fibre optique avec un quatrième emplacement (c''') à l'intérieur dudit plan focal et séparé dudit premier emplacement (b''), lesdits premier et quatrième emplacements (b'', c''') étant sur des côtés opposés d'un troisième axe radial de ladite troisième surface réfléchissante sphérique, lesdits premier et quatrième emplacements (b'', c''') étant déplacés d'une distance égale dudit troisième axe radial, de sorte que le centre de courbure de ladite troisième surface réfléchissante sphérique se trouve sur une ligne droite entre lesdits premier et quatrième emplacements (b'', c'''), ce par quoi ledit quatrième emplacement (c''') est optiquement complémentaire dudit premier emplacement (b''), de sorte que la lumière de ladite quatrième longueur d'onde audit premier emplacement (b'') a son image par ladite troisième surface réfléchissante

sphérique audit quatrième emplacement (c'''); et des moyens définissant une cinquième position pour mettre en registre une extrémité d'une cinquième fibre optique avec un cinquième emplacement (b''') à l'intérieur dudit plan focal et séparé dudit premier emplacement (b''), lesdits premier et cinquième emplacements (b'', b''') étant sur des côtés opposés d'un quatrième axe radial de ladite quatrième surface réfléchissante sphérique, lesdits premier et cinquième emplacements (b'', b''') étant déplacés d'une distance égale dudit quatrième axe radial, de sorte que le centre de courbure de ladite quatrième surface réfléchissante sphérique se trouve sur une ligne droite entre lesdits premier et cinquième emplacements (b'', b'''), ce par quoi ledit cinquième emplacement (b''') est optiquement complémentaire dudit premier emplacement (b''), de sorte que la lumière de ladite troisième longueur d'onde audit premier emplacement (b'') a son image par ladite quatrième surface réfléchissante sphérique audit cinquième emplacement (b''').

5. Le dispositif selon la revendication 1, dans lequel toutes les surface réfléchissantes précitées sont espacées l'une par rapport à l'autre par des milieux solides, optiquement transparents.

FIG.___1

FIG.___1A

EP 0 115 443 B1

FIG.___ 2

FIG.___ 3A

FIG.___ 3B

FIG.___ 4